# EUROPÄISCHE PATENTSCHRIFT

(11) **EP 2 788 729 B1**
(45) Veröffentlichungstag und Bekanntmachung des Hinweises auf die Patenterteilung: **05.01.2022**
(21) Anmeldenummer: 12797799.9
(22) Anmeldetag: 21.11.2012
(51) Int. Cl.: G01H 11/06, B60R 21/015

(54) **VORRICHTUNG ZUR ERFASSUNG ZUMINDEST EINES KÖRPERTEILS EINER PERSON AN EINEM DEFINIERTEN ORT**
DEVICE FOR DETECTING AT LEAST ONE BODY PART OF A PERSON IN A DEFINED LOCATION
DISPOSITIF DESTINÉ À DÉTECTER AU MOINS UNE PARTIE DU CORPS D'UNE PERSONNE EN UN ENDROIT DÉFINI

(30) Priorität: 07.12.2011 DE 102011087866
(43) Veröffentlichungstag der Anmeldung: 15.10.2014
(73) Patentinhaber: Robert Bosch GmbH, 70442 Stuttgart (DE)
(72) Erfinder: HELMLE, Michael, 73732 Esslingen (DE); RAPPS, Peter, 76227 Karlsruhe (DE)
(86) Internationale Anmeldenummer: PCT/EP2012/073172
(87) Internationale Veröffentlichungsnummer: WO 2013/083403

(56) Entgegenhaltungen:
- EP-A1- 2 017 139
- DE-A1- 4 004 353
- US-A- 4 654 546
- US-A1- 2004 129 478
- BOVTUN V ET AL: "Ferroelectret non-contact ultrasonic transducers", APPLIED PHYSICS A; MATERIALS SCIENCE & PROCESSING, SPRINGER, BERLIN, DE, vol. 88, no. 4, 15 June 2007 (2007-06-15), pages 737-743, XP019540374, ISSN: 1432-0630, DOI: 10.1007/S00339-007-4060-3
- A. Sutor ET AL: "A8.2 - Research on Ferroelectret Based Ultrasound Transducers", Proceedings SENSOR 2011, 9 June 2011 (2011-06-09), page 187, XP055595237, DOI: 10.5162/sensor11/a8.2 ISBN: 978-3-9810993-9-3
- STEFAN J RUPITSCH ET AL: "Ultrasound transducers based on ferroelectret materials", IEEE TRANSACTIONS ON DIELECTRICS AND ELECTRICAL INSULATION, IEEE SERVICE CENTER, PISCATAWAY, NJ, US, vol. 18, no. 1, 1 February 2011 (2011-02-01), pages 69-80, XP011329532, ISSN: 1070-9878, DOI: 10.1109/TDEI.2011.5704495
- BACKMAN J ET AL: "Audio and ultrasonic transducers based on electrothermomechanical film (ETMF)", 19900403; 19900403 - 19900406, 3 April 1990 (1990-04-03), pages 1173-1776, XP010641410,

## Beschreibung

### Stand der Technik

Die Erfindung geht aus von einer Vorrichtung zur Erfassung zumindest eines Körperteils einer Person an einem definierten Ort gemäß dem Oberbegriff des Anspruchs 1.

Insbesondere in Kraftfahrzeugen kann es aus Sicherheitsaspekten notwendig sein, zu detektieren, ob sich ein Körperteil einer Person an einem definierten Ort befindet. So ist zum Beispiel hilfreich im Rahmen der Auslösung eines Airbags, ob der entsprechend zugeordnete Sitz überhaupt belegt ist. Sofern der Sitz nicht belegt ist, kann das Auslösen des Airbags unterbleiben.

Weiterhin ist insbesondere bei vollautomatisch oder semiautomatisch ausgeführten Fahrmanövern notwendig, dass sich der Fahrer im Fahrzeug aufhält, um das Fahrmanöver zu überwachen und gegebenenfalls, insbesondere wenn eine Gefahrensituation auftritt, eingreifen zu können. Auch in diesem Fall ist es notwendig festzustellen, ob sich überhaupt eine Person im Fahrzeug befindet.

Neben der Erkennung, ob sich eine Person auf einem Sitz im Fahrzeug befindet ist es weiterhin insbesondere bei Einsatz von automatischen Fensterhebern notwendig, zu detektieren, ob sich Körperteile im Bereich der schließenden Scheibe befinden, um Unfällen vorbeugen zu können.

Ein Einklemmschutz beim Schließen von automatisch betriebenen Fenstern eines Kraftfahrzeuges ist zum Beispiel in DE 40 04 353 A1 offenbart. Zur Erkennung, ob sich ein Fremdkörper im Schließbereich des Fensters befindet, ist ein Annäherungssensor an einem der Schließkante des Scheibenglases zugewandten Rahmenteils des die Fensterscheibe offenhebenden Rahmens angeordnet. Als Annäherungssensor wird zum Beispiel ein kapazitiver, induktiver, potentiometrischer oder optischer Sensor im Türholm eingesetzt.

Eine Sitzbelegungserkennung mit Einsatz von beispielsweise Ultraschallsensoren, die am Dachhimmel oder an der Amaturentafel des Fahrzeuges angeordnet sind, ist beispielsweise in DE 198 12 745 A1 beschrieben.

Aus der DE 40 04 353 A1 ist ein Einklemmschutz für motorisch betätigte Vorrichtungen wie versenkbare Fensterscheiben, Heckklappen, Kofferraumdeckel, Türzuzieheinrichtungen und Schiebedächer, mit einem Annäherungssensor, der an einem der Schließkante des Fensterscheibenglases zugewandten Rahmenteil eines die Fensterscheibe aufnehmenden Rahmens angeordnet ist, und ein Annäherungssignal an eine Steuerelektronik abgibt, die bei Anwesenheit eines Fremdkörpers zwischen der Schließkante des Fensterscheibenglases und dem der Schließkante zugewandten Rahmenteil ein Stillsetzsignal an den Fensterhebemechanismus abgibt, bekannt. Die Bewegung der Fensterscheibe wird erfasst und die Steuerelektronik blendet eine auf eine Bewegung der Fensterscheibe beruhende Änderung des Annäherungssignals aus.

In Bovtun V. et al.: "Ferroeleciret non-contact ultrasonic transducer", Applied Physics A; Material Science & Processing, Springer, Berlin, DE, Bd. 88, Nr. 4, 15. Juli 2007, Seiten 737 - 743 wurde der Einfluss der Elektroden auf die elektromechanischen Eigenschaften untersucht. Die Elektronenstrahlverdampfungstechnologie wurde an die EMFIT-Filme angepasst, und Filme mit beidseitigen Au- und Al-Elektroden wurden hergestellt, ohne die elektromechanischen Eigensqhaften zu verringern oder zu unterdrücken.

Schließlich wurden Prototypen basierend auf den EMFIT-Filmen entwickelt. Trotz des einfachen Aufbaus und des Fehlens von Anpassungsschichten wurde im luftgekoppelten Ultraschall-Experiment eine hohe Empfindlichkeit der EMFIT-Wandler nachgewiesen. Amplituden- und Verzögerungszeit-gescannte Bilder des Polyethylen-Stufenkeils mit Löchern, die sowohl im Impuls-Echo- als auch im Transmissionsmodus erhalten werden, zeigen, dass eine berührungslose Ultraschallabbildung und -prüfung mit EMFIT-Wandlern möglich ist.

Die Veröffentlichung "Research on Ferroelectret Based Ultrasound Transducers", A. Sutor et al., Proceedings Sensor 2011, 9. Juni 2011, Seite 187 XP0555905237 bezieht sich auf elektroakustische Übertragungselemente, insbesondere deren Material. Aufgrund der zellularen Struktur des Materials sind diese flexibel und einem Aussetzen von Umgebungsluft gegenüber unempfindlich. Derartige Polymere sind demzufolge geeignet für Ultraschallanwendungen. Ultraschall Transducer können insbesondere bei verschiedenen Anwendungen in Luft oder in Wasser eingesetzt werden. Ein robuste Eigenschaften aufweisendes Sensorfeld umfasst beispielsweise 16 Einzelelemente in einer 4x4- Anordnung.

Nachteil der zur Sitzbelegungserkennung eingesetzten Sensoren ist, dass mehrere Sensoren erforderlich sind, die jeweils sichtbar im Innenbereich des Fahrzeuges montiert sind.

Mit bekannten Ultraschallsensoren als Einklemmschutz ist es notwendig, mehrere Sensoren im Rahmen zu positionieren, um den gesamten Öffnungsbereich der Fensterscheibe abzudecken. Aufgrund der Baugröße solcher Sensoren ist es notwendig, diese innerhalb des Rahmens zu positionieren. Dies erfordert einen komplexen Aufbau der Messeinrichtung und eine aufwändige mechanische Integration.

### Offenbarung der Erfindung

### Vorteile der Erfindung

Eine erfindungsgemäße Vorrichtung zur Erfassung zumindest eines Körperteils einer Person an einem definierten Ort umfasst mindestens zwei ultraschallbasierte Sensoren, wobei mit den ultraschallbasierten Sensoren jeweils der Abstand eines Objekts zum Sensor bestimmbar ist und aus den von den jeweiligen Sensoren bestimmten Abständen die Lage des Objekts bestimmbar ist, dadurch gekennzeichnet dass jeder ultraschallbasierte Sensor eine elektromechanische Folie umfasst, wobei die elektromechanische Folie eine Membran aus einem Ferroelektretmaterial, bestehend aus geschlossenporigen Polymerschäumen, umfasst und die Materialien der Polymerschäume aus Polytetrafluorethylen, Polyfluorethypropylen, Polyvinylidenfluorid oder Copolymere dieser Polymere ausgewählt sind; und wobei auf einer

Seite der elektromechanischen Folie eine Masseelektrode und auf der der Masseelektrode gegenüberliegenden Seite der elektromechanischen Folie eine Sensorelektrode aufgebracht sind, wobei die ultraschallbasierten Sensoren eine gemeinsame elektromechanische Folie und eine gemeinsame Masseelektrode aufweisen und durch voneinander getrennte Sensorelektroden definiert werden.

Die Verwendung einer elektromechanischen Folie zur Erfassung zumindest eines Körperteils einer Person erlaubt zum Beispiel zur Erkennung von Fremdkörpern im Schließbereich einer Fensterscheibe eines automatischen Fensterhebers eine einfache Montage am Fensterrahmen.

Eine elektromechanische Folie im Sinne der vorliegenden Erfindung umfasst eine Membran aus einem sogenannten Ferroelektret-Material. Als Ferroelektret-Materialien werden geschlossenporige Polymerschäume bezeichnet, bei denen an der Grenzfläche der einzelnen Poren positive und negative elektrostatische Ladungen dauerhaft lokalisiert sind. Durch die aufgeprägten elektrostatischen Ladungen dehnen sich die einzelnen Poren beim Anlegen einer elektrischen Spannung aus oder ziehen sich bei umgekehrter Polarisation zusammen. Hierdurch ist es möglich, durch entsprechende Anregung eine Schwingung zu erzeugen, die als Schallimpuls gesendet werden kann. Entsprechend kann beim Auftreffen von Schallwellen durch die mechanische Veränderung der Größe der Poren eine Spannung erzeugt werden, die abgegriffen werden kann.

Als Polymermaterialien zur Herstellung der Schäume eignen sich fluorbasierte

Polymere, Polytetrafluorethylen, Polyfluorethylenpropylen und Polyvinylidenfluorid. Weiterhin eignet sich zum Beispiel auch Polyethylenterephthalat. Neben den genannten Polymeren sind auch Copolymere dieser Polymere geeignet.

Um die elektromechanische Folie als Sender oder Empfänger für Schallsignale nutzen zu können, ist eine Seite der Folie im Allgemeinen vollflächig metallisiert. Diese Schicht dient als Masseelektrode. Auf der der vollflächig metallisierten Seite gegenüberliegenden Seite sind jeweils an den Positionen, an denen die jeweiligen Sender und/oder Empfänger lokalisiert sein sollen, Elektroden aufgebracht. Wenn nur ein einzelner Sensor gewünscht ist, kann auch die zweite Seite vollflächig metallisiert sein.

Sowohl die vollflächige Masseelektrode als auch die Elektroden an den Positionen, die jeweils als Sender und/oder Empfänger dienen, werden zum Beispiel durch stromlose und/oder galvanische Abscheidung, chemische Abscheideverfahren oder physikalische Abscheideverfahren aufgebracht. Besonders geeignet zum Aufbringen der Metallisierung für die Elektroden sind Verfahren, bei denen das Metall auf die elektromechanische Folie aufgedampft wird, beispielsweise CVD (Chemical Vapor Deposition)-Verfahren oder PVD (Physical Vapor Deposition)-Verfahren.

Alternativ ist es auch möglich, keine der Elektroden vollflächig auszubilden sondern sowohl Vorderseitenelektrode als auch Rückseitenelektrode jeweils gegenüberliegend zu gestalten. Bevorzugt ist es jedoch, entweder die Vorderseitenelektrode oder die Rückseitenelektrode vollflächig zu gestalten.

Wenn zur Erfassung des zumindest einen Körperteils einer Person mehrere Sensoren eingesetzt werden sollen, ist es bevorzugt, wenn die ultraschallbasierten Sensoren wie vorstehend beschrieben, eine gemeinsame elektromechanische Folie und eine gemeinsame Masseelektrode aufweisen und durch voneinander getrennte Sensorelektroden, die als Metallisierung auf der elektromechanischen Folie aufgebracht sein können, definiert werden.

Um eine Beschädigung der Sensoren im laufenden Betrieb zu vermeiden, ist es weiterhin bevorzugt, wenn auf die Sensorelektroden und/oder die Masseelektrode eine Schutzschicht aufgebracht ist. Die Schutzschicht kann zum Beispiel in Form eines Schutzlackes auf die Sensorelektroden und/oder die Masseelektrode aufgebracht sein. Ein solcher Schutzlack ist zum Beispiel ein Lack auf Polyurethanbasis.

In einer ersten Ausführungsform wird die elektromechanische Folie zur Erfassung zumindest eines Körperteils einer Person mit der die Masseelektrode aufweisenden Seite auf einem Karosserieteil eines Kraftfahrzeugs aufgebracht. Die einzelnen Sensorelektroden sind in diesem Fall derart auf der elektromechanischen Folie angeordnet, dass ein gewünschter Bereich des Kraftfahrzeugs mit den so aufgebrachten Sensoren überwacht werden kann. Hierbei ist es zum Beispiel möglich, dass mit einem auf einem Karosserieteil eines Kraftfahrzeugs aufgebrachten Sensor mindestens ein Sitz des Kraftfahrzeugs hinsichtlich der Sitzbelegung überwacht werden kann. Weiterhin können die Sensorelektroden auch so ausgerichtet sein, dass beispielsweise ein Öffnungsbereich eines Fahrzeugfensters überwacht wird. In diesem Fall ist insbesondere zu überwachen, ob sich beim Schließen des Fensters zusätzlich zu dem durch die Schließbewegung auftretenden in den überwachten Raum eintretenden Objekt ein weiteres Objekt befindet. Hierbei ist der sich durch die Schließbewegung des Fensters ergebende Fremdkörper bei der Auswertung der von den Sensoren erfassten Umgebung zu berücksichtigen. Wenn sich zusätzlich ein Objekt im Öffnungsbereich befindet, kann zum Beispiel zunächst ein Warnsignal ausgegeben werden und dann die Bewegung des Fensters gestoppt werden, um ein Einklemmen des detektierten Objektes, beispielsweise des detektierten Körperteils, beispielsweise einer Hand einer Person, zu vermeiden.

Um ein Objekt im Öffnungsbereich eines Fensters des Kraftfahrzeugs zu detektieren, ist es insbesondere bevorzugt, die elektromechanische Folie am Scheibenrahmen des zu überwachenden Fensters anzubringen. Weiterhin ist es auch möglich, zum Beispiel für die Sitzplatzerkennung die elektromechanische Folie an der A-, B- oder C-Säule des Kraftfahrzeugs oder am Innenspiegel des Kraftfahrzeugs zu befestigen. Durch die Verwendung einer Folie, die flächig auf ein Bauteil aufgebracht wird, ist zum einen eine einfache Montage der Sensoren möglich und zum anderen können die Sensoren unsichtbar, das heißt ohne die optische Linie des Fahrzeugs zu stören, verbaut werden.

Um die Sensoren weiterhin unauffällig im Fahrzeug zu montieren kann die Schutzschicht, die auf die Sensorelektroden und/oder die Masseelektrode aufgebracht ist, so gestaltet sein, dass sich die elektromechanische Folie zum Beispiel als Designelement im Fahrzeug einsetzen lässt.

Neben der Verwendung als Einklemmschutz bei einem automatisch schließenden Fenster kann die Vorrichtung zur Erfassung zumindest eines Körperteils auch als Einklemmschutz bei automatisch schließender Tür, automatisch schließendem Schiebedach oder automatisch schließendem Verdeck eines Cabriolets verwendet werden. Bei der Verwendung als Einklemmschutz bei automatisch schließender Tür ist die elektromechanische Folie vorzugsweise im Bereich des Türrahmens, zum Beispiel an der A-, B-, oder C- Säule oder am Rahmen einer Heckklappe angebracht. Wenn die Vorrichtung als Einklemmschutz bei einem automatisch schließenden Schiebedach eingesetzt werden soll, so wird die elektromechanische Folie mit den darauf aufgebrachten Sensorelektroden vorzugsweise am Rahmen des Schiebedaches angebracht. Alternativ ist auch jeweils eine Befestigung der elektromechanischen Folie an dem schließenden Bauteil, beispielsweise dem Fenster, der Tür, der Heckklappe oder dem Schiebedach möglich. Entsprechend wird bei Verwendung der elektromechanischen Folie als Einklemmschutz bei einem automatisch schließenden Verdeck die elektromechanische Folie vorzugsweise entweder am Windschutzscheibenrahmen oder direkt am Verdeck angebracht.

Bevorzugt ist jeweils eine Montage der elektromechanischen Folie an dem sich nicht bewegenden Bauteil des Kraftfahrzeugs.

Wenn die elektromechanische Folie zur Sitzbelegungserkennung in einem Kraftfahrzeug eingesetzt werden soll, so ist es einerseits möglich, die elektromechanische Folie außerhalb des Sitzes, beispielsweise an der A-, B-, oder C-Säule des Kraftfahrzeugs oder dem Innenspiegel des Kraftfahrzeugs anzubringen oder alternativ die elektromechanische Folie in dem entsprechend zu überwachenden Sitz des Fahrzeugs zu montieren. In diesem Falle wird zum einen ein entsprechendes Echo eines von einem Sensor der elektromechanischen Folie gesendeten Ultraschallsignals detektiert, weiterhin ist es auch möglich, direkt eine Verformung der elektromechanischen Folie aufgrund einer Sitzbelegung zu erfassen.

In einer Ausführungsform der Erfindung wird eine außerhalb des Sitzes, zum Beispiel an einem Karosserieteil des Kraftfahrzeugs aufgebrachte elektromechanische Folie genutzt, um zu detektieren, ob ein Sitz belegt ist. In diesem Fall ist es auch möglich, die Größe der den Sitz belegenden Person zu erfassen. Die Erfassung der Größe der den Sitz belegenden Person kann zum Beispiel notwendig sein, wenn entschieden werden muss, ob ein Airbag ausgelöst werden soll oder nicht. So ist es zum Beispiel möglich, dass bei Erfassung einer Größe der den Sitz belegenden Person unter einer vorgegebenen Größe ein mit dem Sitz verbundener Airbag deaktiviert wird.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: einen Sitz eines Kraftfahrzeugs mit darin aufgenommener elektromechanischer Folie,
- Figur 1.1: eine Einbauanordnung der elektromechanischen Folie im in Figur 1 gezeigten Fahrzeugsitz,
- Figur 2: eine mögliche Anordnung einer elektromechanischen Folie als Einklemmschutz für ein automatisch schließendes Fenster eines Kraftfahrzeugs.

### Ausführungsbeispiele der Erfindung

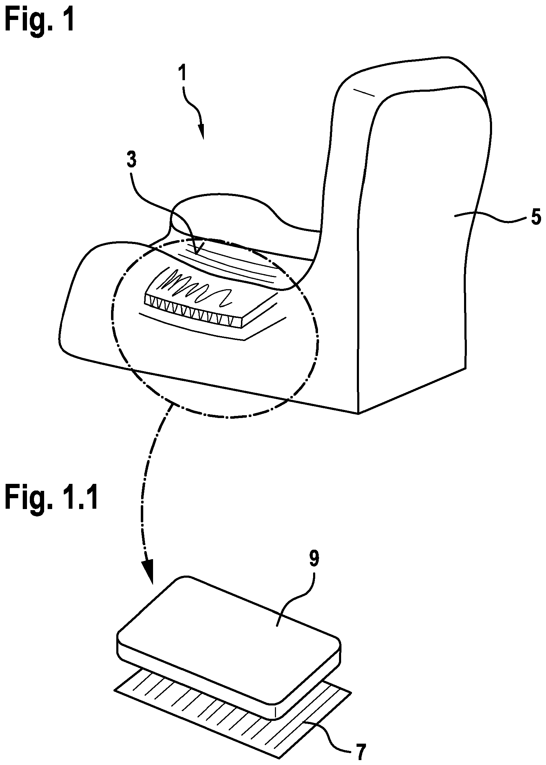

In Figur 1 ist ein Fahrersitz eines Kraftfahrzeugs dargestellt, in den eine elektromechanische Folie zur Sitzbelegungserkennung aufgenommen ist.

Ein Sitz 1 in einem Kraftfahrzeug umfasst eine Sitzfläche 3 und eine Rückenlehne 5. Üblicherweise sind die Sitzfläche 3 und die Rückenlehne 5 dabei als unabhängie Bauteile gefertigt, die miteinander verbunden werden. Wenn der Sitz 1 als Fahrersitz oder als Beifahrersitz in einem Kraftfahrzeug eingesetzt wird, ist die Rückenlehne 5 üblicherweise verstellbar.

In einem nicht erfindungsgemäßen Beispiel ist im Sitz 1 im Bereich der Sitzfläche 3 eine elektromechanische Folie 7 aufgenommen. Mit Hilfe der elektromechanischen Folie 7 kann erfasst werden, ob der Sitz 1 belegt ist. Dies ist zum Beispiel notwendig, um zum Beispiel nur bei Bedarf einen Airbag auszulösen. Wenn der Sitz 1 nicht belegt ist, soll auch kein Auslösen des Airbags erfolgen. Desweiteren ist eine Sitzbelegungserkennung zum Beispiel auch dann notwendig, wenn das Fahrzeug mit Assistenzsystemen ausgerüstet ist, die ein automatisches Manövrieren des Kraftfahrzeugs erlauben. Auch im Fall eines automatischen Manövrierens des Kraftfahrzeugs muss der Fahrer des Fahrzeugs den Manövervorgang überwachen. Die Überwachung erfolgt zum Beispiel vom Fahrersitz des Kraftfahrzeugs aus. In Fällen, in denen der Manövervorgang vom Fahrer überwacht werden muss, wobei der Fahrer im Kraftfahrzeug Platz genommen haben soll, ist es zum Beispiel möglich, mithilfe der elektromechanischen Folie 7 im Fahrersitz 1 zu erfassen, ob der Sitz 1 belegt ist. Wenn der Sitz 1 nicht belegt ist, deutet dies darauf hin, dass der Fahrer das Kraftfahrzeug verlassen hat und das Fahrmanöver wird abgebrochen, da nicht sichergestellt werden kann, dass der Fahrer das Fahrmanöver überwacht.

Um mithilfe der elektromechanischen Folie 7 zu erfassen, ob der Sitz 1 belegt ist, wird die elektromechanische Folie 7, in einem nicht erfindungsgemäßen Beispiel, mit einem Kissen zur Druckübertragung 9 abgedeckt. Das Kissen 9 zur Druckübertragung wird dann vom Polstermaterial des Sitzes 1 umschlossen. Mithilfe des Kissens 9 zur Druckübertragung wird bei Belegung des Sitzes 1 Druck auf die elektromechanische Folie 7 übertragen. Durch den auf die elektromechanische Folie 7 übertragenenen Druck verformt sich die elektromechanische Folie 7 und es wird ein Signal erzeugt.

Eine elektromechanische Folie 7 ist eine Folie aus einem sogenannten Ferroelektret-Material oder Elektret-Material. Dieses ist im Allgemeinen ein Polymermaterial, das eine Porenstruktur aufweist. Besonders geeignet sind geschlossenzellige Schäume. Die Porenstruktur wird mit elektrostatischen Ladungen versehen. Durch einen auf die Folie ausgeübten Druck werden die Poren im Schaum verformt und damit die Lage der elektrostatischen Ladungen verändert. Hierdurch wird ein Strom erzeugt. Dieser kann gemessen werden. Der Aufbau und die Herstellung von solchen elektromechanischen Folien ist zum Beispiel in US 4,654,546 beschrieben.

Als Ferroelektret-Materialien eignen sich zum Beispiel Materialien auf Basis von Polymeren wie Polytetrafluorethylen, Polytetrafluorethylpropylen, Polyethylenteraphthalat, Polyvinylidenfluorid oder Copolymere derselben.

Sobald der Sitz nicht mehr belegt ist und kein Druck mehr auf die elektromechanische Folie 7 ausgeübt wird, erfolgt eine Rückverformung der elektromechanischen Folie in den Ursprungszustand. Hierdurch wird die Lage der Ladungen erneut verändert, was durch einen veränderten Stromfluss gemessen werden kann. Durch die Änderung der Lage der Ladungen an den Poren zueinander kann somit erfasst werden, ob ein Druck auf die elektromechanische Folie ausgeübt wird oder nicht und durch den auf die elektromechanische Folie ausgeübten Druck wird die Belegung des Sitzes 1 erkannt.

Da sich die Folie in Abhängigkeit vom ausgeübten Druck verformt, kann gleichzeitig aufgrund der Stärke der Verformung der elektromechanischen Folie auch auf den darauf ausgeübten Druck geschlossen und somit das Gewicht des den Sitz belegenden Gegenstandes oder der den Sitz belegenden Person erfasst werden. Hierdurch lässt sich zum Beispiel ausschließen, dass der Sitz als belegt erkannt wird, wenn ein Gegenstand darauf abgelegt wird, der jedoch eine deutlich geringere Masse aufweist, als eine Person, die auf dem Sitz 1 sitzt. Hierdurch lassen sich insbesondere Fehler aufgrund einer Fehlbelegungserkennung ausschließen. Insbesondere wird vermieden, dass zum Beispiel eine auf dem Sitz 1 abgelegte Tasche als Person erkannt wird, die den entsprechenden Sitz 1 belegt.

Um die durch die Lageänderung der Ladungen entstehende Spannung zu erfassen, ist die elektromechanische Folie auf einer Seite mit einer Masseelektrode und auf der anderen Seite mit mindestens einer Sensorelektrode versehen. Auch ist es möglich, um zum Beispiel zu erfassen über welchen Bereich der Sitz belegt ist, mehrere Sensorelektroden vorzusehen. Neben einer einzelnen Masseelektrode, die als Beschichtung über die gesamte Fläche der elektromechanischen Folie ausgeführt ist, ist es auch möglich, jeweils den einzelnen Sensorelektroden gegenüberliegend eine Masseelektrode vorzusehen. Die Elektroden können hierbei durch jedes beliebige, dem Fachmann bekannte Verfahren auf die elektromechanische Folie aufgebracht werden. So ist es zum Beispiel möglich, durch geeignete Abscheidungsverfahren eine Metallschicht zur Ausbildung der Elektrode auf der elektromechanischen Folie 7 abzuscheiden. Alternativ ist es auch möglich, zum Beispiel eine Metallfolie mit der elektromechanischen Folie zur Ausbildung der Elektroden zu verbinden. Das zur Druckübertragung eingesetzte Kissen 9 kann zum Beispiel ein pneumatisches Kissen oder ein Gelkissen sein. Wesentlich ist hierbei, dass ein auf das Kissen 9 ausgeübter Druck an die elektromechanische Folie übertragen wird. Um zu vermeiden, dass die elektromechanische Folie 7 zum Beispiel beim Ablegen eines spitzen Gegenstandes auf dem Sitz 1 beschädigt wird, ist das Kissen 7 vorzugsweise so ausgestaltet, dass spitze Gegenstände abgepolstert werden und nicht unmittelbar mit der elektromechanischen Folie 7 in Kontakt treten, damit diese nicht beschädigt wird.

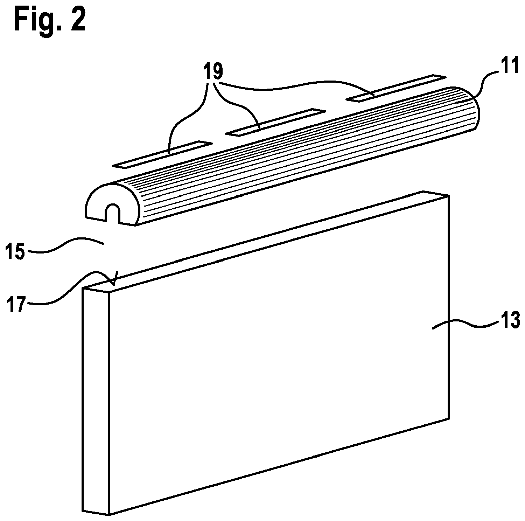

In Figur 2 ist eine mögliche erfindungsgemäße Anordnung einer elektromechanischen Folie als Einklemmschutz für ein automatisch schließendes Fenster eines Kraftfahrzeugs dargestellt.

Die in Figur 2 dargestellte elektromechanische Folie entspricht in ihrem Aufbau dem vorstehend beschriebenen.

Um eine elektromechanische Folie als Einklemmschutz einsetzen zu können, wird diese zum Beispiel hinter einer Dichtlippe 11 für eine Scheibe 13 positioniert.

Damit die elektromechanische Folie 7 als Einklemmschutz wirken kann, ist es notwendig zu erkennen, ob im Spalt 15 zwischen Scheibe 13 und Dichtlippe 11 ein Gegenstand ist. Hierzu ist es vorteilhaft, wenn die elektromechanische Folie als Ultraschallsensor arbeitet und ein Schallsignal aussendet. Das Signal wird an einem Gegenstand in Spalt 15 oder an der Oberkante 17 der Scheibe 13 reflektiert. Das reflektierte Echo des Signals wird von der elektromechanischen Folie 7, die den Sensor bildet, empfangen. Bei unterschiedlichen Schalllaufzeiten und damit unterschiedlichen Abständen, die von den einzelnen Sensoren 19 erfasst werden, kann davon ausgegangen werden, dass sich ein Objekt im Spalt 15 zwischen der Scheibe 13 und der Dichtlippe 11 befindet. Insbesondere bei einer automatisch betätigten Scheibe 13, zum Beispiel mit elektrischem Fensterheber, kann bei Erfassen eines solchen Fremdkörpers im Spalt 15 der Schließvorgang abgebrochen werden, um so insbesondere Verletzungen an Körperteilen, beispielsweise Fingern oder Beschädigungen eines Gegenstandes, der sich im Spalt 15 befindet, zu vermeiden.

Wenn die elektromechanische Folie 7 als Ultraschallsensor 19 eingesetzt wird, wird an die elektromechanische Folie 17 eine Wechselspannung angelegt, die zu einer Änderung der Lage der Ladungen zueinander führt, wodurch eine Schwingung erzeugt wird. Diese Schwingung wird als Signal ausgesendet. Wenn das reflektierte Signal als Echo wieder auf den Sensor 19 auftrifft, fängt dieser an zu schwingen, wodurch sich die Lage der Ladungen wieder verändert, wodurch ein Strom erzeugt wird, der gemessen werden kann. Aus der Laufzeit zwischen Senden des Signales und Empfang des Echos lässt sich die Entfernung zu dem Objekt bestimmen, das das Signal reflektiert hat. Wenn wie in Figur 2 dargestellt mehrere Sensoren 19 nebeneinander eingesetzt werden, wird bei einem Objekt, das sich nicht über die gesamte Breite der Oberkante 17 der Scheibe 13 erstreckt von den einzelnen Sensoren 17 ein unterschiedlicher Abstand zu einem Objekt erfasst. Wenn sich kein Objekt im Spalt 15 befindet, ist der von den Sensoren 19 erfasste Abstand jeweils der gleiche. Durch die unterschiedlich erfassten Abstände bei Vorhandensein eines Objekts im Spalt 15 wird dieses Objekt aufgrund der unterschiedlich empfangenen Signale erkannt.

Neben dem Einsatz der Ultraschallsensoren, wie in Figur 2 dargestellt bei einem automatisch betätigten Fenster können aus der elektromechanischen Folie hergestellte Sensoren auch zur Erfassung von Objekten im Bereich von automatisch schließenden Türen oder einem automatisch schließenden Schiebedach eingesetzt werden.

Neben der Gestaltung einzelner Abschnitte zur Bildung der Sensoren 19 ist es auch möglich, einen langen Streifen einer elektromechanischen Folie einzusetzen und die einzelnen Sensoren jeweils durch Gestaltung der Sensorelektroden zu bilden. Hierbei ist es möglich, wie vorstehend bereits beschrieben, für jeden Sensor eine Sensorelektrode auf der elektromechanischen Folie auszubilden und eine gemeinsame Masseelektrode vorzusehen oder alternativ jeder Sensorelektrode gegenüberliegend eine Masseelektrode vorzusehen.

## Patentansprüche

1. Vorrichtung zur Erfassung zumindest eines Körperteils einer Person an einem definierten Ort, umfassend mindestens zwei ultraschallbasierte Sensoren, wobei mit den ultraschallbasierten Sensoren jeweils der Abstand eines Objekts zum Sensor bestimmbar ist und aus den von den jeweiligen Sensoren bestimmten Abständen die Lage des Objekts bestimmbar ist, **dadurch gekennzeichnet dass** jeder ultraschallbasierte Sensor eine elektromechanische Folie (7) umfasst, wobei die elektromechanische Folie eine Membran aus einem Ferroelektretmaterial, bestehend aus geschlossenporigen Polymerschäumen, umfasst und die Materialien der Polymerschäume aus Polytetrafluorethylen, Polyfluorethypropylen, Polyvinylidenfluorid oder Copolymere dieser Polymere ausgewählt sind; und wobei auf einer Seite der elektromechanischen Folie (7) eine Masseelektrode und auf der der Masseelektrode gegenüberliegenden Seite der elektromechanischen Folie (7) eine Sensorelektrode aufgebracht sind, wobei die ultraschallbasierten Sensoren eine gemeinsame elektromechanische Folie (7) und eine gemeinsame Masseelektrode aufweisen und durch voneinander getrennte Sensorelektroden definiert werden.

2. Vorrichtung gemäß Anspruch 1, **dadurch gekennzeichnet, dass** auf die Sensorelektrode und/oder die Masseelektrode eine Schutzschicht aufgebracht ist.

3. Karosserieteil eines Kraftfahrzeugs, umfassend eine Vorrichtung gemäß Anspruch 1, **dadurch gekennzeichnet, dass** die elektromechanische Folie (7), mit der die Masseelektrode aufweisenden Seite auf dem Karosserieteil aufgebracht ist.

4. Karosserieteil gemäß Anspruch 3, **dadurch gekennzeichnet, dass** das Karosserieteil eine A-, B- oder C-Säule des Kraftfahrzeugs ein Scheibenrahmen oder ein Innenspiegel ist.

5. Verwendung einer Vorrichtung gemäß einem Anspruch 1 als Einklemmschutz bei automatisch schließendem Fenster, automatisch schließender Tür, automatisch schließendem Schiebedach oder automatisch schließendem Verdeck in einem Kraftfahrzeug.

## Claims

1. Apparatus for capturing at least one body part of a person at a defined location, comprising at least two ultrasound-based sensors, wherein the ultrasound-based sensors can be used to determine in each case the distance of an object from the sensor and to determine, from the distances determined by the respective sensors, the position of the object, **characterized in that** each ultrasound-based sensor comprises an electromechanical film (7), wherein the electromechanical film comprises a membrane made of a ferroelectret material, consisting of closed-pored polymer foams, and the materials of the polymer foams are selected from polytetrafluoroethylene, poly fluorinated ethylene propylene, polyvinylidene fluoride or copolymers of these polymers; and wherein a ground electrode is applied on one side of the electromechanical film (7) and a sensor electrode is applied on the side of the electromechanical film (7) that lies opposite to the ground electrode, wherein the ultrasound-based sensors have a common electromechanical film (7) and a common ground electrode and are defined by spaced-apart sensor electrodes.

2. Apparatus according to Claim 1, **characterized in that** a protective layer is applied on the sensor electrode and/or the ground electrode.

3. Body part of a motor vehicle, comprising an apparatus according to Claim 1, **characterized in that** the electromechanical film (7) is applied with the side having the ground electrode on the body part.

4. Body part according to Claim 3, **characterized in that** the body part is an A-pillar, B-pillar or C-pillar of the motor vehicle, a window frame or an interior mirror.

5. Use of an apparatus according to Claim 1 as antitrap protection in the case of an automatically closing window, an automatically closing door, an automatically closing sliding roof or an automatically closing top in a motor vehicle.

## Revendications

1. Dispositif destiné à détecter au moins une partie du corps d'une personne en un endroit défini, comprenant au moins deux capteurs à base d'ultrasons, les capteurs à base d'ultrasons permettant respectivement de déterminer la distance d'un objet par rapport au capteur et de déterminer la position de l'objet à partir des distances déterminées par les capteurs respectifs,
**caractérisé en ce que** chaque capteur à base d'ultrasons comprend un film électromécanique (7), le film électromécanique étant une membrane en matériau ferroélectrique, composée de mousses de polymère à alvéoles fermées, et les matériaux des mousses de polymère étant sélectionnés parmi le polytétrafluoréthylène, le polyfluoroéthylène propylène, le polyfluorure de vinylidène ou les copolymères de ces polymères ; et dans lequel une électrode de masse est appliquée sur une face du film électromécanique (7), et une électrode de capteur est appliquée sur la face opposée à l'électrode de masse du film électromécanique (7), les capteurs à base d'ultrasons présentant un film électromécanique commun (7) et une électrode de masse commune et étant définis par des électrodes de capteur séparées les unes des autres.

2. Dispositif selon la revendication 1, **caractérisé en ce qu'**une couche de protection est appliquée sur l'électrode de capteur et/ou l'électrode de masse.

3. Pièce de carrosserie d'un véhicule automobile, comprenant un dispositif selon la revendication 1, **caractérisée en ce que** le film électromécanique (7) est appliqué sur la pièce de carrosserie avec la face présentant l'électrode de masse.

4. Pièce de carrosserie selon la revendication 3, **caractérisée en ce que** la pièce de carrosserie est un montant A, B ou C du véhicule automobile, un cadre de vitre ou un miroir intérieur.

5. Utilisation d'un dispositif selon la revendication 1 comme protection anti-écrasement sur une vitre à fermeture automatique, une portière à fermeture automatique, un toit ouvrant à fermeture automatique ou un capot à fermeture automatique dans un véhicule automobile.
